## Europäisches Patentamt

## European Patent Office

## Office européen des brevets

(11) Publication number: **0 067 645**
**B1**

(12) **EUROPEAN PATENT SPECIFICATION**

(45) Date of publication of patent specification: **18.12.85**

(21) Application number: **82302941.8**

(22) Date of filing: **08.06.82**

(51) Int. Cl.⁴: **C 08 F 6/06** // (C08F6/06, 210:02)

(54) Deactivation of catalyst in solution process for polymerization of alpha-olefins.

(30) Priority: **09.06.81 GB 8117677**

(43) Date of publication of application:
**22.12.82 Bulletin 82/51**

(45) Publication of the grant of the patent:
**18.12.85 Bulletin 85/51**

(84) Designated Contracting States:
**BE DE FR GB IT NL**

(56) References cited:
**FR-A-2 302 305**
**GB-A- 849 753**

(73) Proprietor: **DU PONT CANADA INC.**
**Box 2200 Streetsville Postal Station**
**Mississauga Ontario L5M 2H3 (CA)**

(72) Inventor: **Hamilton, Michael Andrew**
**944 Kenshaw Street**
**Kingston Ontario, C K7P 1MI (CA)**
Inventor: **Harbourne, David Alan**
**180 Glen Castle Road**
**Kingston Ontario, C K7M 4N6 (CA)**
Inventor: **Zboril, Vaclav George**
**613 Pimlico Place**
**Kingston Ontario, C K7L 5T7 (CA)**

(74) Representative: **Ellis, John Clifford Holgate et al**
**MEWBURN ELLIS & CO. 2/3 Cursitor Street**
**London EC4A 1BQ (GB)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 067 645

## Description

The present invention relates to a process for the polymerization of α-olefins and especially to the deactivation of the coordination catalyst used in a solution process for the polymerization of α-olefins. In particular the present invention relates to such deactivation wherein the deactivated catalyst so obtained is not separated from the polymer.

Polymers of ethylene, for example, homopolymers of ethylene and copolymers of ethylene and higher α-olefins, are used in large volumes for a wide variety of end uses, for example, in the form of film, fibres, moulded or thermoformed articles, pipe, coatings and the like.

Processes for the preparation of homopolymers of ethylene and copolymers of ethylene and higher α-olefins are known. Such processes include processes in which the monomers are polymerized in the presence of a coordination catalyst, for example, a catalyst comprising a compound of a transition metal belonging to Groups IVB—VIB of the Periodic Table and an organometallic compound of a metal belonging to Groups I—IIIA of the Periodic Table.

A particularly preferred process for the polymerization of α-olefins is the high temperature or "solution" polymerization process, an example of which is described in Canadian Patent 660 869 of A. W. Anderson, E. L. Fallwell and J. M. Bruce, which issued 1963 April 9. In a solution process the process parameters are selected in such a way that both the monomer and polymer are soluble in the reaction medium. Under such conditions accurate control over the degree of polymerization, and hence the molecular weight of the polymer obtained, may be achieved, for example, by control of the reaction temperature.

The polymerization reaction in a solution polymerization process is normally terminated by addition of a so-called "deactivator", for example, a fatty acid or an alcohol. The fatty acid is admixed with hydrocarbon solvent, normally the solvent of the polymerization process, and fed into the polymerization mixture, usually shortly after that mixture passes from the reactor. The polymerization mixture that has been treated with deactivator contains catalyst residues which may be removed by contacting the mixture with an adsorbent, for example, alumina. Such a deactivation and catalyst removal process is described in Canadian Patent 732 279 of B. B. Baker, K. M. Brauner and A. N. Oemler, which issued 1966 April 12.

A method for the deactivation of a coordination catalyst in a high pressure solvent-free process for the polymerization of α-olefins is disclosed in U.S. 4 105 609 of J—P. Machon, B. Levresse and P. Gloriod, which issued 1978 August 8. The method involves injecting into the polymerization reaction mixture an alkali or alkaline earth metal salt of a carboxylic acid e.g. sodium stearate, calcium stearate or sodium benzoate. Water is also known as a deactivated or coordination catalysts, see, for example GB—A—894753.

Coordination catalysts containing vanadium may conveniently be deactivated by contacting the polymerization mixture with a solution of a salt of an alkaline earth metal or zinc and an aliphatic monocarboxylic acid dissolved in the hydrocarbon solvent used in the polymerization process. Such deactivation of coordination catalysts containing vanadium tends to result in polymer of improved colour, as is disclosed in our earlier European patent application No. 0062127. However such deactivation tends not to improve the colour of polymers when the catalyst is a titanium-based coordination catalyst, including such catalyst containing minor amounts of vanadium. Moreover the presence of iron or other heavy metals, usually in the form of impurities, tends to adversely affect the colour of the polymer when such a deactivation of catalyst is used.

It has now been found that titanium-based coordination catalysts used in a solution polymerization process may be deactivated to give polymer of improved colour by sequentially contacting the polymerization mixture with a minor amount of water and then with a solution of a salt of an alkaline metal or zinc and a monocarboxylic acid dissolved in a hydrocarbon solvent, preferably the solvent used in the polymerization process.

Accordingly the present invention provides a solution polymerization process for the preparation of high molecular weight polymers of α-olefins selected from the group consisting of homopolymers of ethylene and copolymers of ethylene and $C_3$—$C_{12}$ α-olefins, said process comprising feeding monomer selected from the group consisting of ethylene and mixtures of ethylene and at least one $C_3$—$C_{12}$ α-olefin, a coordination catalyst and inert hydrocarbon solvent to a reactor, polymerizing said monomer at a temperature of up to 320°C and a pressure of less than 25 MPa, deactivating the catalyst in the solution so obtained by sequentially admixing therewith a minor amount of water followed by a solution of a salt of an alkaline earth metal or zinc and an aliphatic monocarboxylic acid dissolved in hydrocarbon solvent, separating the hydrocarbon solvent and other volatile matter from the resultant solution and recovering a composition comprising said high molecular weight polymer, the amount of water being not more than 2.5 moles of water per mole of halogen plus alkyl radicals in the coordination catalyst.

In a preferred embodiment of the process of the present invention the water has a water-soluble metal chelating agent dissolved therein.

In another embodiment of the process of the present invention the carboxylic acid is a $C_8$ carboxylic acid and the alkaline earth metal is calcium.

In a further embodiment the coordination catalyst is a titanium-based coordination catalyst.

The present invention is directed to a solution polymerization process for the preparation of high molecular weight polymers of α-olefins. In particular the polymers of α-olefins are homopolymers of

2

ethylene and copolymers of ethylene and higher α-olefins, especially such higher α-olefins having 3 to 12 carbon atoms i.e., $C_3$—$C_{12}$ α-olefins, including bicyclic α-olefins, examples of which are 1-butene, 1-hexene, 1-octene and bicyclo-(2,2,1)-2-heptene. In addition cyclic endomethylenic dienes may be fed to the process with the ethylene or mixtures of ethylene and $C_3$—$C_{12}$ α-olefin, as is described in Canadian Patent 980 498 of C. T. Elston, which issued 1975 December 23.

In the solution polymerization process of the present invention α-olefin monomer, a coordination catalyst and inert hydrocarbon solvent are fed to a reactor. Coordination catalysts for solution polymerization processes are known, for example those described in the aforementioned Canadian Patent 660 869, in Canadian Patent 1 119 154 of A. N. Mollison and V. G. Zboril, which issued 1982 March 02 and in Canadian Patent Application No. 367 952 of V. G. Zboril and M. A. Hamilton, filed 1981 January 06. The α-olefin monomer may be solely ethylene or a mixture of ethylene and one or more of the higher α-olefins.

Solution polymerization processes may be operated at temperatures of up to 320°C and especially in the range 105—310°C, the lower temperature being above the lowest solubilization temperature of the polymer, as will be understood by those skilled in the art of solution polymerization processes. The pressures used in the process of the present invention are those known for solution polymerization processes viz. less than 25 MPa and especially in the range of about 4—25 MPa. The pressure and temperature are controlled so that both the unreacted monomers and the polymers formed remain in solution.

The hydrocarbon solvent used in the polymerization process is a hydrocarbon solvent that is inert with respect to the coordination catalyst. Such solvents are known and include hexane, heptane, octane, cyclohexane, methylcyclohexane and hydrogenated naphtha. The solvent used in the polymerization process is preferably also used in the preparation of the coordination catalyst. The hydrocarbon solvent is the major component of the polymerization mixture fed to the reactor, usually comprising at least 80% of the reaction mixture. In the process the α-olefin is dissolved in the solvent.

The mixture that exits from the polymerization reactor comprises polymer, unreacted monomer, coordination catalyst some of which remains in an active state, and hydrocarbon solvent. A deactivator is added to the mixture to terminate the polymerization process. In the process of the present invention the deactivator is added in two steps. In the first step a minor amount of water is added to the polymerization mixture. The amount of water added is up to 2.5 moles of water per mole of halogen plus alkyl radicals in the coordination catalyst. Preferably 0.25—1.5 moles of water per mole of halogen plus alkyl radicals are added. In a preferred embodiment the water has dissolved therein a water-soluble chelating agent. Such an agent may be added to chelate heavy metals which may be present in the polymerization mixture as impurities, for example as a result of corrosion of the apparatus used in the polymerization process. Typically such metals are iron and/or manganese. Examples of such metal chelating agents are alkali metal fluorides, phosphates, oxalates, tartrates and citrates.

In the second step the deactivator is a solution of a salt of an alkaline earth metal or zinc and an aliphatic monocarboxylic acid dissolved in hydrocarbon solvent. In particular the hydrocarbon solvent used for the deactivator is the same as the solvent used in the polymerization process. If a different solvent is used, it must be compatible with the solvent used in the polymerization process, not cause precipitation of any component of the polymerization mixture and not cause adverse effects on the solvent recovery system associated with the polymerization process.

The salt of the second deactivator solution must be dissolved in the solvent in order to obtain intimate contact between the deactivator and any remaining active catalyst and to obtain uniform dispersion of the deactivator and catalyst residues i.e. the form of the catalyst after deactivation, throughout the polymer, thereby facilitating the production of polymer of uniform properties.

In the salt of the deactivator solution, the metal is an alkaline earth metal or zinc, especially magnesium or calcium. The remainder of the salt is derived from an aliphatic carboxylic acid, especially such an acid having 6 to 20 carbon atoms. In a preferred embodiment the acid has 8 to 12 carbon atoms. The acid is preferably a branched chain aliphatic acid although straight chain aliphatic acids and cycloaliphatic acids may be used. Moreover the acids may be saturated or unsaturated acids. However the acid must be such that the salt thereof that is used in the process of the present invention is soluble in the hydrocarbon solvent used therein. In preferred embodiments the salt is calcium 2-ethyl hexanoate, calcium naphthenate, calcium tallate or the like.

As is exemplified hereinafter, the temperatures at which the first and second deactivators are added to the polymerization mixture may affect the colour of the polymer subsequently obtained. Preferably, the first deactivator is added to the mixture at a temperature of less than about 235°C and the second deactivator is added to the mixture at a temperature of less than about 120°C. If the deactivators are added at higher temperatures the polymer colour may, depending for example on the amount of catalyst in the polymerization mixture, not be acceptable for commercial use.

In the process of the present invention the deactivated polymerization mixture is fed to a separator, which may be a multistage separator, to separate unreacted monomer, hydrocarbon solvent and any other volatile matter from the polymer. In contrast to the usual practice in a solution process, no steps are taken to remove catalyst residues and/or deactivator from the polymer using adsorbents or other techniques. After separation from solvent and unreacted monomer, the polymer may be extruded into water and cut into pellets or other suitable comminuted shapes. Pigments, antioxidants and other additives may be added to the polymer, especially immediately prior to the formation of the pellets or other comminuted shapes.

The polymer obtained according to the process of the present invention may be used in a wide variety of end uses, as is known for homopolymers of ethylene and copolymers of ethylene and higher α-olefins.

The use of the deactivation process of the present invention may result in a reduction in corrosion of those parts of the apparatus of the process that are located downstream from the introduction of deactivator. The use of the deactivation process of the present invention may also result in the production of polymer of improved colour, especially when the coordination catalyst used in the process is a titanium-based coordination catalyst.

The present invention is illustrated by the following examples.

Example I

A polymerization catalyst was prepared by in-line mixing (1:1) a 6.0 mmol/litre solution of titanium tetrachloride in cyclohexane with a 6.0 mmol/litre solution of diethylaluminum chloride in cyclohexane. After about 15 seconds at room temperature, the resultant admixture was heated to 225°C by injecting therein a stream of cyclohexane preheated to 300°C. The combined stream was maintained at 225°C for one minute before being fed into a stirred polymerization reactor. A solution of ethylene in cyclohexane and a 20 mmol/litre solution of triethylaluminum in cyclohexane were also fed to the reactor. The ratio of the triethylaluminum to the titanium in the catalyst was adjusted so as to obtain the best conversion of ethylene to polymer; that ratio was in the range of 1.5—3.0 on an atomic basis. The reactor was operated at a temperature of 230°C, a pressure of 7.5 MPa, a space velocity of 0.33—0.40 min$^{-1}$, a conversion of ethylene to polymer of greater than 50% and a concentration of titanium, on an atomic basis, of 0.3—1.0 mmol/litre.

The first deactivator was continuously added to the reaction mixture shortly after it passed from the reactor. The thus treated solution was passed through a bed of 2 mm glass beads to facilitate mixing. The space velocity in the bed, on an empty bed basis, was 2.2 min$^{-1}$. The second deactivator was then continuously added to the mixture. The resultant solution was maintained at 130—140°C. Subsequently the pressure of the solution was reduced to 110 KPa (abs) whereupon the polymer precipitated as a slurry in the solvent. The slurry was evaporated to dryness on a steam bath. The polymer thus obtained was ground and pressed at 190°C into plaques about 2 mm in thickness. The yellowness index of the plaques was measured according to the procedure of ASTM D 1925.

The results obtained using different amounts of deactivators were as follows:

| Run No. | 1 | 2 | 3 | 4 | 5 | 6 |
|---|---|---|---|---|---|---|
| Deactivator<br>(a) Water Ratio* | 0 | 0.58 | 0.78 | 1.18 | 0.59 | 0.68 |
| (b) Calcium<br>2-ethylhexanoate<br>Ratio** | 0.75 | 0.75 | 0.75 | 0.63 | 0.94 | 0.83 |
| Yellowness Index | 38.0 | 25.8 | 30.9 | 22.1 | 12.0 | −2.2 |

*moles of water per mole of halogen (Cl) plus alkyl (ethyl)
**ratio of calcium to halogen (Cl), atomic basis
Note: Run 1 is not of the present invention and is included for comparison.

This example indicates the beneficial effect of the deactivator system of the present invention on the colour of the polymer obtained. A run without calcium 2-ethylhexanoate was not attempted as it was expected to produce polymer that would be unacceptably corrosive on the apparatus being used.

Example II

The procedure of Example I was repeated except that calcium 2-ethylhexanoate was used as the first deactivator and water was used as the second deactivator. The results obtained using different amounts of deactivator were as follows:

**0 067 645**

| Run No. | 7 | 8 |
|---|---|---|
| Deactivator | | |
| (a) Calcium 2-ethyl-hexanoate Ratio* | 0.62 | 0.56 |
| (b) Water Ratio** | 0.29 | 0.82 |
| Yellowness Index | 29.7 | 18.6 |

*ratio of calcium to halogen (Cl), atomic basis
**moles of water per mole of halogen (Cl) plus alkyl (ethyl)

This Example indicates that the order of which the two deactivators are added is important. In particular the results obtained in Run 8 of this Example were substantially poorer than the results obtained in Run 6 of Example I in which the order of addition was reversed.

Example III
The procedure of Example I was repeated except that the titanium component of the catalyst was replaced with a mixture of 85 mol% of titanium tetrachloride with 15 mol% of vanadium oxytrichloride.
The results obtained were as follows:

| Run No. | 9 | 10 | 11 | 12 | 13 | 14 | 15 |
|---|---|---|---|---|---|---|---|
| Deactivator | | | | | | | |
| (a) Water Ratio* | 0 | 0.54 | 1.07 | 2.14 | 0.52 | 1.04 | 1.56 |
| (b) Calcium 2-ethyl-hexanoate Ratio** | 0.77 | 0.85 | 0.85 | 0.85 | 0.99 | 0.99 | 0.99 |
| Yellowness Index | 16.2 | 22.8 | 1.4 | 5.6 | 3.6 | 2.4 | 5.5 |

*moles of water per mole of halogen (Cl) plus alkyl (ethyl)
**ratio of calcium to halogen (Cl), atomic basis
Note: Run 9 is not of the present invention and is included for comparison.

This Example illustrates the deactivation of a coordination catalyst containing titanium and vanadium.

Example IV
The procedure of Example I was repeated except that a one molar solution of t-butanol in cyclohexane was used as the first deactivator.
The results obtained were as follows:

| Run No. | 16 | 17 | 18 | 19 | 20 | 21 |
|---|---|---|---|---|---|---|
| Deactivator | | | | | | |
| (a) t-Butanol Ratio* | 0.65 | 0.65 | 0.65 | 0.39 | 0.39 | 0.39 |
| (b) Calcium 2-ethyl-hexanoate Ratio** | 0.94 | 1.30 | 0.56 | 0.56 | 0.94 | 1.30 |
| Yellowness Index | 35.7 | 34.0 | 32.6 | 26.2 | 33.2 | 16.2 |

*moles of t-butanol per mole of halogen (Cl) plus alkyl (ethyl)
**ratio of calcium to halogen (Cl), atomic basis

This Example illustrates that the use of an alcohol as the first deactivator is inferior to the use of pure water.

Example V
The procedure of Example I was repeated except that corrosion products of the apparatus were present in the effluent from the reactor. An aqueous solution of 100 g of potassium fluoride per litre of total solution was used as the first deactivator. All samples of polymer contained more than 10 ppm of iron.
The results were as follows, colour being assessed by visual examination on a scale of 0 (no colour) to 5 (yellow colouration):

5

0 067 645

| Run No. | 22 | 23 | 24 |
|---|---|---|---|
| Deactivator | | | |
| (a) Potassium fluoride Solution Ratio* | 0.45 | 0.84 | 1.25 |
| (b) Calcium 2-ethyl-hexanoate Ratio** | 0.99 | 0.99 | 0.99 |
| Colour | 1 | 0 | 5 |

*moles of water per mole of halogen (Cl) plus alkyl (ethyl)
**ratio of calcium to halogen (Cl), atomic basis

This Example illustrates the beneficial effect on the colour of the polymer of the use of a chelating agent viz. potassium fluoride, in the first deactivator when corrosion products e.g. iron, are present in the polymer solution. The Example also indicates that there is an optimum amount of chelating agent and excess amounts e.g. Run 24, may have little beneficial effect on the colour of the polymer.

Example VI

The procedure of Example I was repeated except that the titanium component of the catalyst was replaced with a mixture of titanium tetrachloride and vanadium oxytrichloride (ratio 85:15 mole basis) in cyclohexane in which the concentration of titanium tetrachloride plus vanadium oxytrichloride was 4.0 mmol/litre. The concentrations of the diethylaluminum chloride and triethyl aluminum solutions were 4.0 and 8.0 mmol/litre, respectively, and the concentration in the reactor of titanium plus vanadium, on an atomic basis, was 0.2—1.0 mmol/litre.

The polymerization mixture that passed from the reactor was deactivated in the following manner: the first deactivator, water, was added to the polymerization mixture shortly after the mixture passed from the reactor. The temperature of the water was varied and is specified hereinafter. The water was injected, at a rate of one mole of water per mole of chloride plus alkyl, through a tube having a diameter of 0.25 mm into the centre of a tube having a diameter of 0.62 cm, the velocity of liquid in the latter tube being 3 cm/sec. The temperature of the resultant polymerization mixture was maintained for about 25 seconds and then reduced to the temperature at which the second deactivator was to be added and maintained for 160 seconds. The second deactivator, calcium 2-ethylhexanoate was then added at a ratio of calcium: chloride (atomic basis) of 0.83. The temperature was maintained for a further 20 seconds and adjusted to 130—140°C. The deactivated mixture was then treated in the manner set forth in Example I.

The results obtained were as follows:

| Run No. | 25 | 26 | 27 | 28 | 29 | 30 |
|---|---|---|---|---|---|---|
| Temperature of Addition | | | | | | |
| First Deactivator | 149 | 160 | 176 | 202 | 238 | 253 |
| Second Deactivator | 109 | 113 | 112 | 110 | 110 | 118 |
| Yellowness Index | 0.68 | 1.78 | −4.58 | 1.88 | 7.16 | 28.4 |

This example shows that when the first deactivator is added at relatively high temperatures, especially temperatures above about 235°C, the resultant polymer tends to be more coloured.

Example VII

The procedure of Example VI was repeated except that the temperature varied was that at which the second deactivator was added.

The results obtained were as follows:

| Run No. | 31 | 32 | 33 | 34 | 35 | 36 |
|---|---|---|---|---|---|---|
| Temperature of Addition | | | | | | |
| First Deactivator | 202 | 202 | 212 | 219 | 219 | 215 |
| Second Deactivator | 104 | 110 | 125 | 144 | 168 | 198 |
| Yellowness Index | 1.22 | 1.88 | 18.9 | 15.3 | 22.8 | 19.6 |

6

This example shows that when the second deactivator is added at relatively high temperatures, especially temperatures above about 120°C, the resultant polymer tends to be more coloured.

**Claims**

1. A solution polymerization process for the preparation of high molecular weight polymers of alpha-olefins selected from the group consisting of homopolymers of ethylene and copolymers of ethylene and $C_3$—$C_{12}$ alpha-olefins, said process comprising feeding monomer selected from the group consisting of ethylene and mixtures of ethylene and at least one $C_3$—$C_{12}$ alpha-olefin, a coordination catalyst and inert hydrocarbon solvent to a reactor, polymerizing said monomer at a temperature of up to 320°C and a pressure of less than 25 MPa, deactivating the catalyst in the solution so obtained, separating the hydrocarbon solvent and other volatile matter from the resultant solution and recovering a composition comprising said high molecular weight polymer, characterised in that the deactivation of the catalyst is performed by sequentially admixing with the catalyst-containing solution: (a) a minor amount of water, the amount of water being not more than 2.5 moles of water per mole of halogen plus alkyl radicals in the coordination catalyst; followed by (b) a solution of a salt of an alkaline earth metal or zinc and an aliphatic monocarboxylic acid dissolved in hydrocarbon solvent.

2. The process of Claim 1 in which the water is in the form of an aqueous solution of a water-soluble metal chelating agent.

3. The process of Claim 1 or Claim 2 in which the agent is an alkali metal salt, said salt being selected from the group consisting of fluorides, phosphates, oxalates, tartrates and citrates.

4. The process of Claims 1—3 in which the polymerization temperature is in the range 105—310°C.

5. The process of Claims 1—4 in which the coordination catalyst is a titanium-based coordination catalyst.

6. The process of Claims 1—5 in which the aliphatic monocarboxylic acid of the second deactivator has 6 to 20 carbon atoms.

7. The process of Claims 1—5 in which the aliphatic monocarboxylic acid of the second deactivator has 8 to 12 carbon atoms.

8. The process of Claims 1—7 in which the salt of the second deactivator is a calcium salt.

9. The process of Claims 1—7 in which the salt is calcium 2-ethylhexanoate.

10. The process of Claims 1—9 in which the hydrocarbon solvent of the second deactivator solution is the same as that fed to the reactor.

11. The process of Claims 1—10 in which the temperature of the solution when the water is added is less than 235°C.

12. The process of Claims 1—11 in which the temperature of the solution when the salt is added is less than 120°C.

**Patentansprüche**

1. Lösungspolymerisationsverfahren zur Herstellung hochmolekularer Polymerer von α-Olefinen, ausgewählt aus der Gruppe bestehend aus Homopolymeren von Ethylen und Copolymeren von Ethylen und $C_3$—$C_{12}$-α-Olefinen, wobei das Verfahren das Zuführen von Monomer, ausgewählt aus der Gruppe bestehend aus Ethylen und Mischungen von Ethylen und wenigstens einem $C_3$—$C_{12}$-α-Olefin, einem Koordinationskatalysator und inertem Kohlenwasserstoff-Lösungsmittel einem Reaktor, Polymerisieren des Monomeren bei einer Temperatur von bis zu 320°C und einem Druck von weniger als 25 MPa, Desaktivieren des Katalysators in der so erhaltenen Lösung, Trennung des Kohlenwasserstoff-Lösungsmittels und anderen flüchtigen Materials von der anfallenden Lösung und Gewinnen einer das hochmolekulare Polymer umfassenden Zusammensetzung umfaßt, dadurch gekennzeichnet, daß die Desaktivierung des Katalysators durch aufeinanderfolgendes Zumischen zu der katalysatorhaltigen Lösung von: (a) einer geringen Menge Wasser, wobei die Wassermenge nicht mehr als 2,5 Mol Wasser pro Mol Halogen-plus Alkyl-Reste im Koordinationskatalysator ist; gefolgt von (b) einer Lösung eines Salzes eines Erdalkalimetalls oder von Zink und einer im Kohlenwasserstoff-Lösungsmittel gelösten aliphatischen Monocarbonsäure, erfolgt.

2. Verfahren nach Anspruch 1, in dem das Wasser in Form einer wässrigen Lösung eines wasserlöslichen Metallchelatbildners ist.

3. Verfahren nach Anspruch 1 oder Anspruch 2, in dem das Mittel ein Alkalimetallsalz ist, wobei das Salz ausgewählt ist aus der Gruppe bestehend aus Fluoriden, Phosphaten, Oxalaten, Tartraten und Citraten.

4. Verfahren nach den Ansprüchen 1 bis 3, in dem die Polymerisationstemperatur im Bereich von 105 bis 310°C ist.

5. Verfahren nach den Ansprüchen 1 bis 4, in dem der Koordinationskatalysator ein Koordinationskatalysator auf Titanbasis ist.

6. Verfahren nach den Ansprüchen 1 bis 5, in dem die aliphatische Monocarbonsäure des zweiten Desaktivators 6 bis 20 Kohlenstoffatome hat.

**0 067 645**

7. Verfahren nach den Ansprüchen 1 bis 5, in dem die aliphatische Monocarbonsäure des zweiten Desaktivators 8 bis 12 Kohlenstoffatome hat.

8. Verfahren nach den Ansprüchen 1 bis 7, in dem das Salz des zweiten Desaktivators ein Calciumsalz ist.

9. Verfahren nach den Ansprüchen 1 bis 7, in dem das Salz Calcium-2-ethylhexanoat ist.

10. Verfahren nach den Ansprüchen 1 bis 9, in dem das Kohlenwasserstoff-Lösungsmittel der zweiten Desaktivatorlösung das gleiche wie das dem Reaktor zugeführte ist.

11. Verfahren nach den Ansprüchen 1 bis 10, in dem die Temperatur der Lösung, wenn das Wasser zugesetzt wird, weniger als 235°C ist.

12. Verfahren nach den Ansprüchen 1 bis 11, in dem die Temperatur der Lösung, wenn das Salz zugegeben wird, weniger als 120°C ist.

## Revendications

1. Procédé de polymérisation en solution pour la préparation de polymères d'alpha-oléfines de poids moléculaire élevé, choisis dans le groupe constitué des homopolymères d'éthylène et des copolymères d'éthylène et d'alpha-oléfines ayant de 3 à 12 atomes de carbone, ledit procédé comprenant les étapes d'introduire un monomère choisi dans le groupe constitué de l'éthylène et de mélanges d'éthylène et d'au moins une alpha-oléfines ayant de 3 à 12 atomes de carbone, un catalyseur de coordination et un solvant hydrocarboné inerte dans un réacteur, de polymériser ledit monomère à une température jusqu'à 320°C et une pression inférieure à 25 MPa, de désactiver le catalyseur dans la solution ainsi obtenue, de séparer le solvant hydrocarboné et autre matière volatile de la solution résultante et de récupérer une composition comprenant ledit polymère à poids moléculaire élevé, caractérisé en ce que la déactivation du catalyseur est réalisée en mélangeant, de façon séquentielle, à la solution contenant le catalyseur: (a) une petite quantité d'eau, la quantité d'eau n'étant pas supérieure à 2,5 moles d'eau par mole de radicaux halogène plus alkyle dans le catalyseur de coordination, suivi par (b) une solution d'un sel d'un métal alcalino-terreux ou de zinc et d'un acide monocarboxylique aliphatique dissous dans de solvant hydrocarboné.

2. Procédé selon la revendication 1, dans lequel l'eau est sous forme d'une solution aqueuse d'un agent de chélation métallique soluble dans l'eau.

3. Procédé selon la revendication 1 ou la revendication 2, dans lequel l'agent est un sel métallique alcalin, ledit sel étant choisi dans le groupe constitué des fluorures, phosphates, oxalates, tartrates et citrates.

4. Procédé selon les revendications 1 à 3, dans lequel la température de polymérisation est comprise entre 105 et 310°C.

5. Procédé selon les revendications 1 à 4, dans lequel le catalyseur de coordination est un catalyseur de coordination à base de titane.

6. Procédé selon les revendications 1 à 5, dans lequel l'acide monocarboxylique aliphatique du second désactivateur a de 6 à 20 atomes de carbone.

7. Procédé selon les revendications 1 à 5, dans lequel l'acide monocarboxylique aliphatique du second désactivateur a de 8 à 12 atomes de carbone.

8. Procédé selon les revendications 1 à 7, dans lequel le sel du second désactivateur est un sel de calcium.

9. Procédé selon les revendications 1 à 7, dans lequel le sel est du 2-éthylhexanoate de calcium.

10. Procédé selon les revendications 1 à 9, dans lequel le solvant hydrocarboné de la solution du second désactivateur est le même que celui introduit dans le réacteur.

11. Procédé selon les revendications 1 à 10, dans lequel la température de la solution quand l'eau est ajoutée est inférieure à 235°C.

12. Procédé selon les revendications 1 à 11, dans lequel la température de la solution quand le sel est ajouté est inférieure à 120°C.

8